# FASCICULE DE BREVET EUROPEEN

(11) **EP 3 784 522 B1**
(45) Date de publication et mention de la délivrance du brevet: **23.02.2022**
(21) Numéro de dépôt: 19718431.0
(22) Date de dépôt: 19.03.2019
(51) Int. Cl.: B60N 2/26, B60R 22/26, B60N 2/75

(54) **EMBASE DE MONTAGE A PIVOTEMENT POUR ACCOUDOIR DE DOSSIER DE BANQUETTE DOTEE D'UN ELEMENT METALLIQUE D'ANCRAGE ANTI-BASCULEMENT**
SCHWENKBARER BEFESTIGUNGSSOCKEL FÜR DIE ARMLEHNE EINER MIT EINEM KIPPSCHUTZMETALLVERANKERUNGSELEMENT VERSEHENEN RÜCKENLEHNE
PIVOTING MOUNTING BASE FOR THE ARMREST OF A SEAT BACKREST PROVIDED WITH AN ANTI-TILTING METAL ANCHORING ELEMENT

(30) Priorité: 26.04.2018 FR 1853671
(43) Date de publication de la demande: 03.03.2021
(73) Titulaire: PSA Automobiles SA, 78300 Poissy (FR)
(72) Inventeur: GRANDIN, Paul, 92600 Asnieres sur Seine (FR); COTTA, Gerald, 78450 Villepreux (FR); GRANDJEAN, Guillaume, 78280 Guyancourt (FR)
(86) Numéro de dépôt international: PCT/FR2019/050615
(87) Numéro de publication internationale: WO 2019/207222

(56) Documents cités:
- FR-A1- 3 042 156
- JP-A- S63 110 050
- US-A1- 2014 319 868
- US-B1- 9 776 538

## Description

### Domaine de l'invention

La présente invention se rapporte au domaine des systèmes de fixation amovible d'un siège enfant sur la banquette arrière d'un véhicule automobile, et en particulier à ceux conformes à la norme ISOFIX.

### Arrière-plan de l'invention

La majeure partie des normes édictées dans le domaine automobile ont pour objectif d'améliorer la sécurité pour les passages dans les véhicules automobiles.

En particulier, la norme ISO 13216-1 porte sur un système universel de fixation amovible d'un siège adapté à la morphologie des enfants sur la banquette arrière des véhicules automobiles.

Ce système d'ancrage couramment désigné par l'appellation ISOFIX, a pour objectif d'éviter les erreurs de montage pouvant survenir avec les modèles universels de ces sièges enfants du fait de leurs difficultés d'installation (ceinture trop courte, contorsions, schéma de montage complexes...), et ainsi de réduire les risques de blessures en cas de collision.

La norme ISO 13216-1 du 15 décembre 1999 spécifie ainsi les dimensions, les exigences générales et les exigences de résistance statique des ancrages rigides destinés à coopérer avec les dispositifs de retenue des sièges enfants amovibles pour banquettes arrière de véhicule. Elle préconise de disposer deux ancrages rigides positionnés dans la zone de la jonction dossier-coussin d'assise du siège courant de passage, ces ancrages étant dimensionnés et positionnés pour permettre d'y fixer aisément et en toute sécurité les attaches correspondantes que comportent les sièges d'enfant correspondant à cette norme.

Malheureusement, la présence de ces deux points de fixation s'avère insuffisante en cas de choc violent : le siège enfant ayant alors tendance à basculer vers l'avant sous l'effet de l'inertie de l'enfant.

Afin de remédier à cet inconvénient, la norme ISO 13216 a évolué en 2004 par l'adjonction d'une deuxième partie prévoyant qu'en plus des deux points d'attache situés de chaque côté du siège enfant, la partie supérieure du siège soit reliée, par une sangle passant derrière la banquette arrière, à un troisième ancrage anti- basculement situé entre les deux ancrages latéraux.

Ce troisième point d'ancrage, désigné couramment par le terme anglais « top tether », se présente généralement sous la forme d'une boucle métallique implantée sur la traverse arrière en tôle métallique du coffre du véhicule, avec une sangle qui passe au dessus d'un dossier de la banquette arrière et qui s'étend en travers du coffre jusqu'à cet ancrage auquel elle est fixée.

Il est également connu, notamment des demandes de brevet US 6,869,141 et US 6,095,604, de fixer directement cet ancrage anti-basculement sur la face arrière de l'armature d'un dossier de la banquette

JPS63110050 montre une embase de montage à pivotement pour accoudoir de dossier de banquette.

La sangle arrimée à la partie supérieure du dossier du siège enfant longe alors la face arrière du dossier jusqu'à cet ancrage auquel elle est fixée par une pince de verrouillage ménagée à l'extrémité de cette sangle.

Cette dernière solution s'avère particulièrement pratique pour l'implantation d'un tel ancrage anti-basculement au niveau de la place centrale de la banquette arrière comme cela est notamment obligatoire pour les véhicules commercialisés aux États-Unis et en Australie.

Malheureusement, celle-ci ne peut être mise en œuvre lorsque le dossier correspondant de la banquette arrière intègre un accoudoir monté pivotant sur son armature et conformé pour être reçu en position escamotée dans un logement complémentaire ménagé dans sa matelassure, ainsi qu'une trappe de mise en relation entre l'habitacle et le coffre implantée à l'arrière de ce logement et accessible aux usagers lorsque l'accoudoir occupe sa position déployée.

En effet, dans une telle configuration, l'ancrage anti-basculement ne peut être arrimé à la trappe car sa résistance mécanique à l'arrachement est insuffisante.

### Objet et résumé de l'invention

La présente invention vise donc à remédier à ces inconvénients, en proposant une solution simple et économique pour la fixation du troisième point d'attache anti-basculement sur l'armature d'un tel dossier de banquette.

Elle propose à cet effet une embase de montage à pivotement pour accoudoir de dossier de banquette conformé pour être reçu en position escamotée dans un logement complémentaire ménagé dans la matelassure dudit dossier, ladite embase de montage comportant une platine en tôle métallique comprenant une plaque prévue pour s'étendre selon un plan moyen sensiblement parallèle à la partie inférieure de l'armature dudit dossier en y étant fixée rigidement, ainsi que deux chapes d'articulation latérales s'étendant perpendiculairement en saillie vers l'avant depuis les deux bords latéraux de ladite plaque et comprenant des moyens d'articulation à pivotement dudit accoudoir ;
caractérisée en ce qu'elle comporte également un élément métallique d'ancrage anti-basculement lié rigidement à ladite plaque et apte à permettre le crochetage d'une pince de verrouillage ménagée à l'extrémité d'une sangle reliée à la partie supérieure d'un siège enfant.

Le fait d'agencer l'élément métallique d'ancrage anti-basculement sur une telle embase d'articulation à pivotement pour accoudoir de dossier de banquette permet de satisfaire aux normes réglementaires concernant sa résistance à l'arrachement, sans impacter l'espace vide au dessus de cette embase nécessaire à l'implantation, à l'arrière du logement recevant l'accoudoir, d'une trappe de mise en relation entre l'habitacle et le coffre.

Selon des caractéristiques préférées de ladite embase de montage, prises seules ou en combinaison :
- celle-ci comporte un fil métallique de garnissage saillant en avant de ladite plaque et étant conformé par pliage de sorte à améliorer la tenue de la partie inférieure de ladite matelassure située en dessous dudit logement, ledit fil comprenant deux tronçons de fixation soudés à la face avant de ladite plaque ;
- ladite plaque présente une découpe dimensionnée pour permettre le passage d'une dite pince de verrouillage au travers de ladite plaque, ledit élément d'ancrage anti-basculement s'étendant transversalement d'un bord latéral à l'autre de ladite découpe ;
- ladite découpe s'étend sur une hauteur comprise entre 40 et 60 mm, tandis qu'elle présente une largeur comprise entre 15 et 25mm ;
- ledit élément d'ancrage anti-basculement consiste en une tige d'ancrage métallique enjambant transversalement ladite découpe étant soudée à ladite plaque, de part et d'autre de ladite découpe ;
- ladite tige d'ancrage est constituée par un tronçon d'extrémité dudit fil de garnissage prolongeant transversalement l'un desdits tronçons de fixation ;
- ledit fil de garnissage formant également ladite tige d'ancrage présente un diamètre compris entre 5 et 8 mm ;
- ledit élément d'ancrage anti-basculement consiste en une languette métallique réalisée d'une seule pièce avec ladite plaque ; et/ou
- ladite languette est repliée sur elle-même le long de son axe transversal médian de sorte à présenter une section transversale en C dont la convexité est tournée vers l'arrière.

La présente invention vise également sous un second aspect, un dossier de banquette pour siège automobile comportant une armature recouverte d'une matelassure, ainsi qu'un accoudoir monté articulé à pivotement sur ladite armature par l'intermédiaire d'une telle embase d'articulation fixée rigidement à la partie inférieure de cette armature, et conformé pour être reçu en position escamotée dans un logement complémentaire ménagé dans ladite matelassure.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective d'une banquette arrière de véhicule automobile comportant un accoudoir monté articulé à pivotement sur l'armature de l'un des dossiers de la dite banquette par l'intermédiaire d'une embase d'articulation selon l'invention ;
- la figure 2 est une vue partielle en coupe transversale de la banquette de la figure 1 prise au niveau de la zone d'articulation de l'accoudoir ;
- la figure 3 représente une vue de dessus d'une embase d'articulation selon un premier mode de réalisation de l'invention, fixée rigidement sur la partie inférieure de l'armature d'un dossier de la banquette ;
- la figure 4 est une vue semblable à la figure 3 d'une embase d'articulation conforme à un deuxième mode de réalisation, fixée rigidement sur la partie inférieure de l'armature d'un dossier de la banquette ;
- la figure 5 représente une vue en coupe transversale prise selon le plan V-V du sous-ensemble de la figure 4 ; et
- la figure 6 est une vue semblable à la figure 3 d'une embase d'articulation conforme à un troisième mode de réalisation, fixée rigidement sur la partie inférieure de l'armature d'un dossier de la banquette.

### Description détaillée de plusieurs modes de réalisation

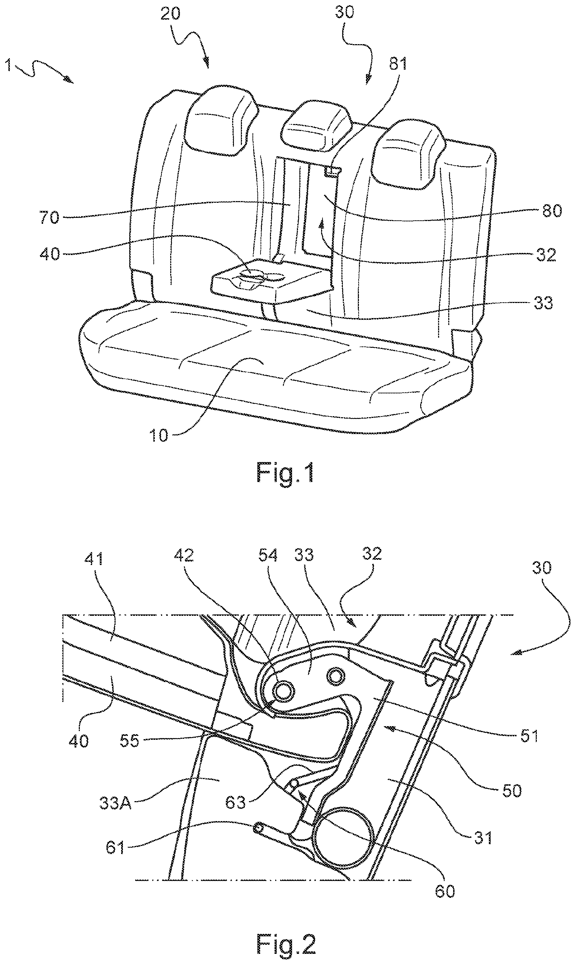

La figure 1 représente une vue de face d'une banquette 1 pour véhicule automobile destinée à être implantée dans la partie arrière de l'habitacle d'un véhicule automobile.

Dans la description qui va suivre et par convention, les termes les termes « avant », « arrière », « inférieur », « supérieur » et « transversal » seront définis par rapport à la position de montage de cette banquette 1 sur un tel véhicule motorisé.

La banquette 1 destinée à accueillir jusqu'à trois passagers, comporte une assise 10 dont l'armature est fixée sur le plancher du véhicule, ainsi que deux dossiers 20, 30 de largeurs différentes disposés côte à côte selon une direction transversale et montés pivotants de manière indépendante autour d'un même axe transversal.

Le premier dossier 20 destiné à recevoir le dos d'un unique passager représente environ 40% de la largeur totale de la banquette 1, tandis que le second dossier 30 pouvant accueillir jusqu'à deux passagers représente environ 60% de cette même largeur.

La banquette 1 comporte également un accoudoir 40 monté à pivotement sur le second dossier de plus grande largeur 30 au niveau de son extrémité latérale interne (celle jouxtant le premier dossier 20) et dont la largeur représente environ 1/3 de celle du second dossier 30 et 20% de la largeur totale de la banquette.

Cet accoudoir 40 est conformé pour être reçu dans un logement complémentaire 32 ménagé dans la matelassure 33 du second dossier 30.

L'accoudoir 40 peut être déplacé entre une position escamotée (non représentée sur les figures) dans laquelle il est reçu dans un logement complémentaire 32 ménagé dans la matelassure 33 du second dossier 30 de sorte à former une surface d'appui pour le dos d'un passager assis du côté interne de ce dossier 30 (ce dernier pouvant alors accueillir simultanément deux passagers assis côte à côte), et une position déployée d'utilisation (illustrée par les figures 1 et 2) dans laquelle cet accoudoir 40 s'étend sensiblement horizontalement de sorte à former une surface d'appui pour le bras d'un passager assis du côté externe de ce second dossier 30.

L'articulation à pivotement de l'accoudoir 40 sur le second dossier 30 est assurée par l'intermédiaire d'une embase métallique de montage 50 liée rigidement à la partie inférieure interne de l'armature 31 de ce second dossier 30 tel qu'illustré sur la figure 2.

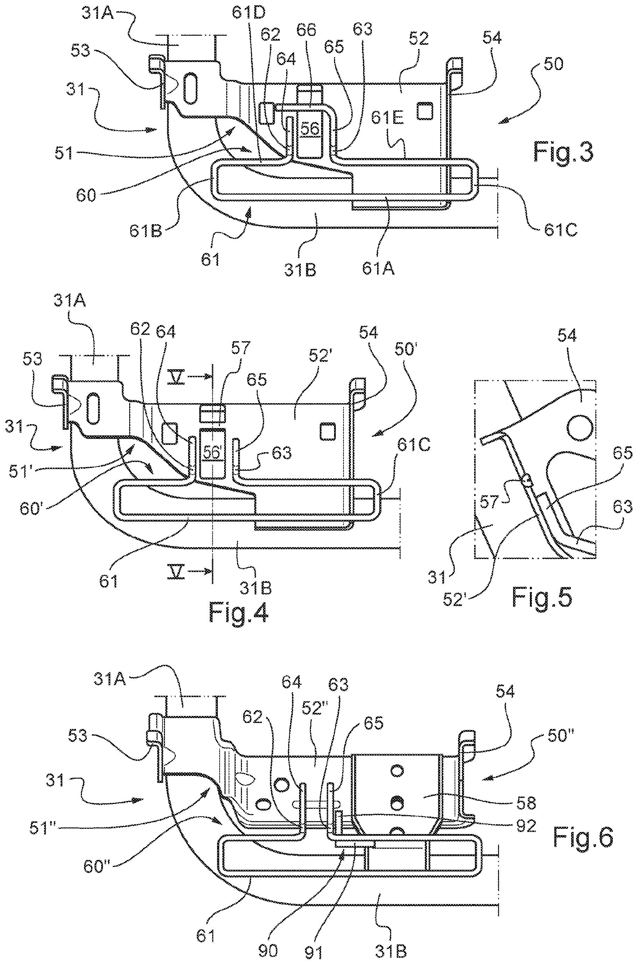

L'embase 50, mieux visible sur la figure 3, comporte une platine métallique 51 formée par une unique feuille de tôle découpée, pliée et/ou emboutie, ainsi qu'un fil métallique de garnissage cintré 60 saillant en avant de la platine 51 à laquelle ses deux extrémités sont fixées et destiné à améliorer la tenue de la partie inférieure 33A de la matelassure 33 bordant le logement 32 (voir figure 2).

La platine métallique 51, dont l'épaisseur est comprise de préférence entre 2 et 3 mm (avantageusement 2,5 mm), comprend une plaque 52 s'étendant selon un plan moyen sensiblement parallèle à celui de l'armature 31 du dossier 30 en y étant soudée par ses extrémités latérales interne et inférieure respectivement à la portion inférieure du montant latéral interne 31A et à la portion latérale interne de la traverse inférieure 31B.

Cette platine 51 comprend également deux chapes d'articulation latérales1 53, 54 s'étendant perpendiculairement en saillie vers l'avant depuis les deux bords latéraux de la plaque 52 et étant dotées chacune d'un orifice circulaire respectif 55 ménagé à proximité de leur extrémité libre (voir figure 2).

Tel qu'illustré par cette figure 2, l'armature 41 de cet accoudoir 40 est pourvue à son extrémité inférieure d'un axe transversal 42 dont les extrémités sont insérées à libre rotation dans ces orifices circulaires 55 ménagées sur les chapes latérales 53, 54.

La plaque 52 présente en outre une découpe rectangulaire 56 ménagée dans sa zone centrale et s'étendant sur la majeure partie de sa hauteur selon une direction parallèle au montant latéral interne 31A de l'armature tubulaire 31 du dossier 30 et perpendiculaire à l'axe transversal d'articulation de l'accoudoir 40.

Cette découpe, dimensionnée pour permettre le passage au travers de la plaque 52 de la pince de verrouillage ménagée à l'extrémité d'une sangle reliée à la partie supérieure d'un siège enfant, s'étend avantageusement sur une hauteur comprise entre 40 et 60 mm, et présente une largeur comprise de préférence entre 15 et 25mm.

Le fil métallique de garnissage 60, avantageusement en acier, comporte une portion principale rectangulaire 61 s'étendant sur la largeur de l'accoudoir 40, en avant de la plaque 52 et en dessous du logement 32.

Cette portion rectangulaire 61 comprend un tronçon transversal inférieur 61A, deux tronçons latéraux parallèles 61B, 61C et deux tronçons transversaux supérieurs alignés 61D, 61E dont les extrémités libres ne se rejoignent pas mais demeurent écartées d'une distance légèrement supérieure à la largeur de la découpe 56.

Le fil 60 qui présente un diamètre compris avantageusement entre 5 et 8 mm, comprend également :
- deux tronçons rectilignes parallèles de liaison 62, 63, reliant respectivement chacune des extrémités libres de ces deux tronçons supérieurs 61D, 61E à la plaque 52, de part et d'autre de la zone d'extrémité inférieure de la découpe 56 ;
- deux tronçons rectilignes de fixation 64, 65 prolongeant ces tronçons de liaison 62, 63 le long de la portion inférieure des deux bords latéraux de la découpe 56, et étant fixés par soudure à la face avant de la plaque 52 ; et
- un tronçon rectiligne d'extrémité formant tige d'ancrage anti-basculement 66 apte à permettre le crochetage d'une pince de verrouillage située à l'extrémité de la sangle supérieure d'un siège enfant, ce tronçon 66 prolongeant transversalement le tronçon de fixation 65 d'un bord latéral à l'autre de la découpe 56 qu'il enjambe et étant soudé à la face avant de la plaque 52, de part et d'autre de cette découpe 56.

Tel qu'illustré sur la figure 1 et afin d'éviter tout risque de pincements de doigts des usagers ainsi que pour des raisons esthétiques, la zone d'articulation de l'accoudoir 40 (c'est-à-dire les chapes 53, 54 et l'axe transversal 42) et le montant latéral interne 31A de l'armature 31 du second dossier 30 situé au niveau du logement 32 sont recouvertes d'un carter 70 venu de moulage à partir d'une matière thermoplastique injectée et emboîté fixement par encliquetage sur cette armature 31.

Comme on peut le remarquer sur la figure 1, l'espace libre situé au dessus de l'embase 50 et au niveau du logement 32 est recouvert par une trappe 80 dont l'extrémité inférieure est monté articulée à pivotement autour d'un axe transversal sur le carter 70.

La trappe 80, qui devient accessible aux usagers lorsque l'accoudoir 40 occupe sa position déployée, comprend un mécanisme de verrouillage non visible apte à coopérer des moyens complémentaires ménagés sur le cache 70 pour la maintenir en position verticale fermée.

Cette trappe 80 comprend également une poignée poussoir 81 dont l'actionnement entraine la libération du mécanisme de verrouillage afin de permettre son basculement vers l'avant jusqu'à ce qu'elle vienne reposer sensiblement horizontalement sur l'accoudoir 40 de sorte à autoriser le passage d'objets de grande longueur tels que des skis, des planches ou des barres disposés dans le coffre à bagages du véhicule.

On va maintenant décrire rapidement et à l'appui des figures 4 et 5, l'embase de montage 50' conforme à un deuxième mode de réalisation de l'invention.

Dans la suite et sur ces figures 4 et 5, on a gardé les mêmes références pour les éléments identiques au premier mode de réalisation et on a ajouté un prime pour les éléments similaires.

Le fil métallique de garnissage 60' de cette embase 50' est semblable au fil 60 décrit précédemment, si ce n'est qu'il est dépourvu du tronçon d'extrémité transversal 66.

Sa platine 51' est également semblable à la platine 51 décrite précédemment, si ce n'est qu'elle comprend une languette 57 réalisée d'une seule pièce dans la même feuille de tôle que la plaque 52' et s'étendant transversalement entre les deux bords latéraux de la découpe 56' de sorte à former l'élément d'ancrage anti-basculement.

Tel qu'illustré sur la figure 5, cette languette de tôle 57 est repliée sur elle-même le long de son axe transversal médian, de sorte à présenter une section transversale en C dont la convexité est tournée vers l'arrière afin de faciliter le crochetage de la pince de verrouillage.

On va maintenant décrire rapidement et à l'appui de la figure 6, l'embase de montage 50" selon un troisième mode de réalisation de l'invention.

Dans la suite et sur cette figure 6, on a gardé les mêmes références pour les éléments identiques au premier mode de réalisation et on a ajouté un prime pour les éléments similaires.

L'embase 50" comporte une première platine 51" globalement semblable à la platine 51 si ce n'est que sa plaque 52" s'étend sur une hauteur moindre que la plaque 52 de sorte à être écartée d'une distance prédéterminée de la traverse inférieure 31B de l'armature 31 permettant le passage de la pince de verrouillage.

Cette plaque 52" est en outre dépourvue de découpe telle que 56 et soudée par sa seule extrémité latérale interne à la portion inférieure du montant latéral interne 31A de l'armature 31.

L'embase 50" comprend également une seconde platine de liaison 58 soudée à la face avant de la partie externe de la première platine 51" et saillant en dessous de cette dernière jusqu'à la traverse inférieure 31B de l'armature tubulaire 31 du dossier 30 à laquelle elle est également soudée.

Le fil métallique de garnissage 60" est semblable au fil 60 décrit précédemment, si ce n'est qu'il est dépourvu du tronçon d'extrémité transversal 66.

Selon ce mode de réalisation, l'embase 50" comporte en outre un second fil métallique plié en équerre 90 : ce fil 90 comprenant un premier tronçon transversal 91 formant élément d'ancrage anti-basculement dont l'extrémité externe libre est soudée à la face avant de la seconde platine de liaison 58, et un second tronçon de fixation 92 reliant l'extrémité interne du premier tronçon 91 à la face avant de la plaque 52" sur laquelle il est soudé.

## Revendications

1. Embase de montage à pivotement pour accoudoir (40) de dossier (30) de banquette (1) conformé pour être reçu en position escamotée dans un logement complémentaire (32) ménagé dans la matelassure (33) dudit dossier (30), ladite embase de montage comportant une platine (51 ; 51' ; 51") en tôle métallique comprenant une plaque (52 ; 52' ; 52") prévue pour s'étendre selon un plan moyen sensiblement parallèle à la partie inférieure de l'armature (31) dudit dossier (30) en y étant fixée rigidement, ainsi que deux chapes d'articulation latérales (53, 54) s'étendant perpendiculairement en saillie vers l'avant depuis les deux bords latéraux de ladite plaque (52 ; 52' ; 52") et comprenant des moyens d'articulation à pivotement (55) dudit accoudoir (40) ;
**caractérisée en ce qu'**elle comporte également un élément métallique d'ancrage anti-basculement (66 ; 57 ; 91) lié rigidement à ladite plaque (52 ; 52' ; 52") et apte à permettre le crochetage d'une pince de verrouillage ménagée à l'extrémité d'une sangle reliée à la partie supérieure d'un siège enfant.

2. Embase de montage selon la revendication 1, **caractérisée en ce qu'**elle comporte un fil métallique de garnissage (60 ; 60' ; 60") saillant en avant de ladite plaque (52 ; 52' ; 52") et étant conformé par pliage de sorte à améliorer la tenue de la partie inférieure (33A) de ladite matelassure (33) située en dessous dudit logement, ledit fil (60 ; 60' ; 60") comprenant deux tronçons de fixation (64, 65) soudés à la face avant de ladite plaque (52 ; 52' ; 52").

3. Embase de montage selon l'une des revendications 1 ou 2, **caractérisée en ce que** ladite plaque (52 ; 52') présente une découpe (56 ; 56') dimensionnée pour permettre le passage d'une dite pince de verrouillage au travers de ladite plaque (52 ; 52'), ledit élément d'ancrage anti-basculement (66 ; 57) s'étendant transversalement d'un bord latéral à l'autre de ladite découpe (56 ; 56').

4. Embase de montage selon la revendication 3, **caractérisée en ce que** ladite découpe (56 ; 56') s'étend sur une hauteur comprise entre 40 et 60 mm, tandis qu'elle présente une largeur comprise entre 15 et 25mm.

5. Embase de montage selon l'une des revendications 3 ou 4, **caractérisée en ce que** ledit élément d'ancrage anti-basculement consiste en une tige d'ancrage métallique (66) enjambant transversalement ladite découpe (56) étant soudée à ladite plaque (52), de part et d'autre de ladite découpe (56).

6. Embase de montage selon les revendications 2 et 5, **caractérisée en ce que** ladite tige d'ancrage est constituée par un tronçon d'extrémité (66) dudit fil de garnissage (60) prolongeant transversalement l'un desdits tronçons de fixation (64, 65).

7. Embase de montage selon la revendication 6, **caractérisée en ce que** ledit fil de garnissage (60) formant également ladite tige d'ancrage (66) présente un diamètre compris entre 5 et 8 mm.

8. Embase de montage selon la revendication 3, **caractérisée en ce que** ledit élément d'ancrage anti-basculement consiste en une languette métallique (57) réalisée d'une seule pièce avec ladite plaque (52).

9. Embase de montage selon la revendication 8, **caractérisée en ce que** ladite languette (57) est repliée sur elle-même le long de son axe transversal médian de sorte à présenter une section transversale en C dont la convexité est tournée vers l'arrière.

10. Dossier de banquette pour siège automobile comportant une armature (31) recouverte d'une matelassure (33), ainsi qu'un accoudoir (40) monté articulé à pivotement sur ladite armature (31) par l'intermédiaire d'une embase d'articulation (50 ; 50' ; 50") fixée rigidement à la partie inférieure de cette armature (31), et conformé pour être reçu en position escamotée dans un logement complémentaire (32) ménagé dans ladite matelassure (33) ;
**caractérisée en ce que** ladite embase d'articulation (50 ; 50' ; 50") est conforme à l'une des revendications 1 à 9.

## Patentansprüche

1. Schwenkbare Montagebasis für eine Armlehne (40) der Rückenlehne (30) einer Sitzbank (1), die so ausgebildet ist, dass sie in eingezogener Position in einer komplementären Aufnahme (32) aufgenommen werden kann, die in der Polsterung (33) der Rückenlehne (30) ausgebildet ist, wobei die Montagebasis eine Platine (51; 51' ; 51") aus Metallblech mit einer Platte (52; 52' ; 52") vorgesehen ist, um sich in einer mittleren Ebene im Wesentlichen parallel zum unteren Teil des Ankers (31) der Rückenlehne (30) zu erstrecken, indem sie starr daran befestigt ist, sowie zwei seitliche Gelenkzapfen (53, 54), die sich senkrecht nach vorn von beiden Seitenrändern der Platte (52) erstrecken; 52' ; 52") und mit Schwenkgelenkmitteln (55) der Armlehne (40);
**dadurch gekennzeichnet, dass** sie auch ein metallisches Element zur Verankerung gegen Kippen (66; 57; 91) fest mit der Platte (52; 52' ; 52") und geeignet, das Einhaken einer Verriegelungsklemme am Ende eines Gurtes zu ermöglichen, der mit dem oberen Teil eines Kindersitzes verbunden ist.

2. Montagesockel nach Anspruch 1, **dadurch gekennzeichnet, dass** er einen Fülldraht (60; 60'; 60"), die von der Platte (52; 52' ; 52") und durch Falten so geformt ist, dass die Halterung des unteren Teils (33A) des Polsters (33) unter dem Gehäuse verbessert wird, wobei der Draht (60; 60'; 60") mit zwei Befestigungsabschnitten (64, 65), die mit der Vorderseite der Platte (52) verschweißt sind; 52' ; 52").

3. Montagebasis nach einem der Ansprüche 1 oder 2, **dadurch gekennzeichnet, dass** die Platte (52; 52') einen Ausschnitt (56; 56') so bemessen ist, dass eine Verriegelungsklemme durch die Platte (52) hindurchgeführt werden kann; 52'), wobei das Kippsicherungselement (66; 57), die sich quer von einer Seitenkante der Aussparung (56) zur anderen erstrecken; 56').

4. Befestigungssockel nach Anspruch 3, **dadurch gekennzeichnet, dass** der Ausschnitt (56; 56') erstreckt sich über eine Höhe zwischen 40 mm und 60 mm und hat eine Breite zwischen 15 mm und 25 mm.

5. Montagebasis nach einem der Ansprüche 3 oder 4, **dadurch gekennzeichnet, dass** das Verankerungselement gegen das Kippen aus einem metallischen Verankerungsstab (66) besteht, der den Ausschnitt (56) quer überbrückt, der auf beiden Seiten des Ausschnitts (56) mit der Platte (52) verschweißt ist.

6. Montagebasis nach den Ansprüchen 2 und 5, **dadurch gekennzeichnet, dass** die Verankerungsstange aus einem Endabschnitt (66) des Fülldrahtes (60) besteht, der einen der Befestigungsabschnitte (64, 65) quer verlängert.

7. Montagebasis nach Anspruch 6, **dadurch gekennzeichnet, dass** der Garniturdraht (60), der auch den Verankerungsschaft (66) bildet, einen Durchmesser zwischen 5 und 8 mm aufweist.

8. Montagebasis nach Anspruch 3, **dadurch gekennzeichnet, dass** das Anti-Kipp-Verankerungselement aus einer Metallzunge (57) besteht, die einstückig mit der Platte (52) ausgebildet ist.

9. Montagebasis nach Anspruch 8, **dadurch gekennzeichnet, dass** die Zunge (57) entlang ihrer mittleren Querachse derart auf sich selbst gebogen ist, dass sie einen C-förmigen Querschnitt aufweist, dessen Konvexität nach hinten gerichtet ist.

10. Sitzrückenlehne für einen Kraftfahrzeugsitz mit einem von einem Polster (33) überdeckten Rahmen (31) und einer Armlehne (40), die über einen Gelenkfuß (50) schwenkbar an dem Rahmen (31) angebracht ist; 50' ; 50") fest mit dem Unterteil der Armierung (31) verbunden und so gestaltet ist, dass sie in eingezogener Stellung in einer komplementären Aufnahme (32) in der Matratze (33) aufgenommen werden kann;
**dadurch gekennzeichnet, dass** die Gelenkbasis (50; 50' ; 50") einem der Ansprüche 1 bis 9 entspricht.

## Claims

1. A pivotable mounting base for an armrest (40) of a backrest (30) of a seat (1) shaped to be received in a retracted position in a complementary housing (32) provided in the padding (33) of said backrest (30), said mounting base comprising a plate (51; 51'; 51") of sheet metal comprising a plate (52; 52'; 52') designed to extend along a mean plane substantially parallel to the lower part of the frame (31) of said backrest (30) by being rigidly fixed thereto, as well as two lateral hinge screws (53, 54) extending perpendicularly projecting forwards from the two lateral edges of said plate (52); 52'; 52') and comprising pivoting articulation means (55) for said armrest (40);
**characterized in that** it also comprises a metal anti-tilt anchoring element (66; 57; 91) rigidly bonded to said plate (52); 52'; 52") and capable of allowing the hooking of a locking clamp provided at the end of a strap connected to the upper part of a child seat.

2. Mounting base according to Claim 1, **characterized in that** it comprises a metal lining wire (60; 60'; 60") projecting in front of said plate (52; 52'; 52") and being shaped by folding so as to improve the strength of the lower part (33A) of said padding (33) located below said housing, said wire (60; 60'; 60") comprising two fastening sections (64, 65) welded to the front face of said plate (52; 52'; 52").

3. Mounting base according to one of claims 1 or 2, **characterized in that** said plate (52; 52') has a cut (56; 56') sized to permit passage of a locking clamp through said plate (52; 52'), said anti-tilt anchoring element (66; 57) extending transversely from one side edge to the other of said cut-out (56); 56').

4. Mount base according to claim 3, characterized as such cut (56; 56') extends between 40 and 60 mm in height and between 15 and 25mm in width.

5. Mounting base according to one of the claims 3 or 4, **characterized by** the fact that the anti-failover anchor component consists of a metal anchor rod (66) which cross-threaded the said cut (56) being welded to the said plate (52) on either side of the said cut (56).

6. A mounting bracket in accordance with claims 2 and 5, **characterized by** the fact that the anchor rod consists of an end section (66) of the said trim wire (60) extending one of the said fastening hops (64, 65) horizontally.

7. Mounting base according to claim 6, which is **characterized by** the said trim wire (60) also forming the said anchor rod (66) has a diameter between 5 and 8 mm.

8. Mounting base according to claim 3, characterized as the said anti-failover anchor consists of a metal tab (57) made of a single piece with the said plate (52).

9. Mounting bracket according to claim 8, **characterized by** that tab (57) is folded onto itself along its midpoint cross-section axis so as to present a C cross section with convexity facing backward.

10. Car seat case containing a frame (31) covered with a padding (33), and an armrest (40) mounted rotated on such a frame (31) through a joint flange (50; 50'; 50") rigidly attached to the bottom of this armature (31) and fitted to be received in the apron position in an additional housing (32) housed in the apron (33);
**characterized in that** said joint cap (50; 50'; 50") is in accordance with one of the claims 1 to 9.
